# EUROPEAN PATENT APPLICATION

(11) **EP 2 738 856 A1**
(43) Date of publication of application: **04.06.2014**
(21) Application number: 12820087.0
(22) Date of filing: 27.07.2012
(51) Int. Cl.: H01M 4/66, H01G 11/66, H01M 4/13

(54) **COLLECTOR, ELECTRODE STRUCTURE, NONAQUEOUS ELECTROLYTE BATTERY, AND ELECTRICITY STORAGE COMPONENT**

(30) Priority: 29.07.2011 JP 2011166393
(71) Applicant: UACJ Corporation, Tokyo 100-0004 (JP); UACJ Foil Corporation, Chuo-ku Tokyo 1030026 (JP)
(72) Inventor: HONKAWA, Yukiou, Tokyo 1000004 (JP); KATO, Osamu, Tokyo 1000004 (JP); SAITO, Sohei, Tokyo 1000004 (JP); WASAMOTO, Mitsuyuki, Kusatsu-shi Shiga 525-0042 (JP); KATAOKA, Tsugio, Kusatsu-shi Shiga 525-0042 (JP)
(74) Representative: Gulde & Partner
(86) International application number: PCT/JP2012/069122
(87) International publication number: WO 2013/018687

(57) **Abstract**

A current collector with improved electrochemical stability having a conductive resin layer formed thereon is provided. The current collector 3 of the present embodiment is structured by forming a conductive resin layer 1 on at least one side of a conductive substrate 2. Here, the conductive resin layer 1 contains an acryl-based resin or a soluble nitrocellulose-based resin, and a conductive material. The current collector 3 has a maximum current response of 10 µA/cm² or lower, when the current response is measured under conditions that the current collector is placed in a nonaqueous electrolyte solution at an electrode potential of +3V to +4.5V versus a lithium reference electrode.

## Description

### Technical Field

The present invention relates to a current collector, an electrode structure, a non-aqueous electrolyte battery, and to a capacitor member.

### Background Art

Recently, in order to achieve sufficient accelerating performance with an electric vehicle and a hybrid vehicle, lithium ion secondary batteries for driving the vehicles have been receiving a demand for the ability to charge and discharge at a high current density. Especially, when conducting discharge at a large current density, decrease in the internal resistance of the battery is necessary to improve the characteristics of maintaining battery voltage and battery capacity (high rate characteristics). The internal resistance includes an interface resistance between the constituting components and a transfer resistance of the ions which are the charged particles in the electrolyte solution. Among them, one of the most important internal resistance is the interface resistance. It has been known that this interface resistance can be decreased by improving the adhesion between the constituting components. As a method for improving the adhesion between the current collector and the active material layer, a current collector prepared by coating a metal foil with a conductive resin has been suggested.

Patent Literature 1 discloses a method for manufacturing a positive electrode possessing superior adhesion property. In the method, a conductive medium comprising a polyacrylic acid or a copolymer of acrylic acid and acrylic acid ester as a main binding agent, and carbon powder as a conductive filler, is coated onto a metal foil. Then, a positive electrode mixture layer is formed on the conductive resin layer, followed by drying for integration, and thus the positive electrode is obtained.

Patent Literature 2 discloses a negative electrode plate of a lithium ion secondary battery. Patent Literature 2 further discloses that a negative electrode material layer is formed on the negative electrode current collector, and that the negative electrode material layer for the negative electrode plate of a lithium ion secondary battery contains carbon powder capable of occluding and releasing lithium ion, and a binding agent comprising PVDF (polyvinylidene fluoride). Here, a binding layer, which is obtained by adding a conductive material to an acryl-based copolymer, is formed in between the negative electrode current collector and the negative electrode material layer.

Patent Literature 3 discloses a current collector which can provide an electrode structure having superior binding property and superior cycle characteristics. The current collector comprises a metal foil which is coated with a resin layer containing an ionomer of ethylene-methacrylic acid copolymer and a conductive filler.

Patent Literature 4 discloses a binder used in an active material layer of a negative electrode. Here, nitrocellulose, polymethyl methacrylate and the like are used as the binder.

### Citation List

### Patent Literature

[Patent Literature 1] JPS62-160656A
[Patent Literature 2] JPH9-35707A
[Patent Literature 3] JPH11-144737A
[Patent Literature 4] JP2011-23341A

### SUMMARY OF INVENTION

### Technical Problem

As discussed, in view of improving adhesion, a current collector prepared by coating a metal foil with a conductive resin has been suggested. However, there has been no technique which teaches the electrochemical stability of the current collector in the electrolyte solution, although such stability is related to the durability of the battery.

The present invention has been made in connection with the afore-mentioned problems. An object of the present invention is improve the electrochemical stability of a current collector having a conductive resin layer formed thereon, the current collector being suitable for the application in a lithium ion battery, an electrical double layer capacitor, and the like.

### Solution to Problem

According to the present invention, there is provided a current collector, comprising: a conductive substrate, and a resin layer possessing conductivity formed on at least one side of the conductive substrate, wherein the current collector has a maximum current response of 10 µA/cm² or lower, when the current response is measured under conditions that the current collector is placed in a non-aqueous solvent at an electrode potential of +3V to +4.5V versus a lithium reference electrode.

According to such constitution, improvement in electrochemical stability of a current collector prepared by forming a conductive resin layer can be achieved. Therefore, by using this current collector, an electrode structure which is suitable for charge and discharge at a high current density and is improved in its lifetime, can be obtained. As a result, a non-aqueous electrolyte battery and a capacitor member using such electrode structure has superior durability, is suitable for charge and discharge at a high current density, and has long lifetime.

In addition, according to the present invention, an electrode structure which uses the afore-mentioned current collector is provided. Here, the resin layer possessing conductivity contains an active material; or an active material layer or an electrode material layer is formed on the resin layer possessing conductivity.

According to such constitution, an electrode structure which is suitable for charge and discharge at a high current density and has an improved lifetime can be obtained, since the resin layer possessing conductivity with superior electrochemical stability is used. As a result, a non-aqueous electrolyte battery and a capacitor member using such electrode structure has superior durability, is suitable for charge and discharge at a high current density, and has long lifetime.

In addition, according to the present invention, a non-aqueous electrolyte battery or a capacitor member which uses the afore-mentioned electrode structure is provided.

According to such constitution, a non-aqueous electrolyte battery and a capacitor member using such electrode structure has superior durability, is suitable for charge and discharge at a high current density, and has long lifetime, since the electrode structure which is suitable for charge and discharge at a high current density and has an improved lifetime is used.

### Advantageous Effects of Invention

According to the present invention, improvement in electrochemical stability can be achieved with the current collector formed with the conductive resin layer. Therefore, an electrode structure, which is suitable for charge and discharge at a high current density, and has long lifetime, can be obtained. As a result, a non-aqueous electrolyte battery and a capacitor member using such electrode structure has superior durability, is suitable for charge and discharge at a high current density, and has long lifetime.

### Brief Description of the Drawings

[FIG. 1] FIG. 1 is a schematic cross-sectional view showing the constituent of the current collector according to one embodiment of the present invention.
[FIG. 2] FIG. 2 is a graph showing an anode polarization curve of the current collector according to one embodiment of the present invention and an anode polarization curve of the current collector according to a Comparative Example.

### Description of Embodiments

Hereinafter, the embodiments of the present invention will be explained with reference to the drawings. Here, in all drawings, the same symbol is applied for the same constitution element, and the explanation will be omitted. In the present specification, "A to B" means "A or more and B or less". In addition, in the following description, number average molecular weight and weight average molecular weight mean the ones measured by GPC (gel permeation chromatography).

### <Embodiment 1 : Current Collector>

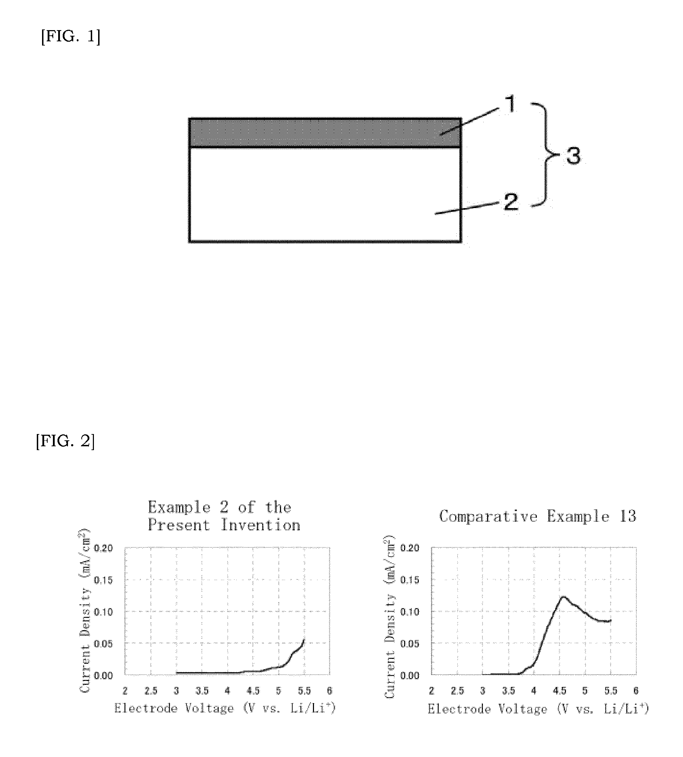

FIG. 1 is a schematic cross-sectional view showing the constituent of the current collector according to one embodiment of the present invention. As shown in FIG. 1, in the current collector 3 of the present embodiment, a conductive resin layer 1 is formed on at least one side of the conductive substrate 2. In addition, the conductive resin layer 1 contains a resin component of an acryl-based resin or a soluble nitrocellulose-based resin and a conductive material. In addition, the current collector 3 has a maximum current response of 10 µA/cm² or lower, when the current response is measured under conditions that the current collector is placed in an electrolyte solution at an electrode potential of +3V to +4.5V versus a lithium reference electrode.

Accordingly, when the current collector 3 of the present embodiment is used, a drastic improvement in the electrochemical stability can be achieved for the current collector 3 having a conductive resin layer 1 formed thereon. Therefore, an electrode structure which is suitable for charge and discharge at a high current density, and has long lifetime can be obtained. As a result, a non-aqueous electrolyte battery and a capacitor member using such electrode structure has superior durability, is suitable for charge and discharge at a high current density, and has long lifetime. That is, according to the present embodiment, a current collector 3 which can improve the high rate characteristics of a non-aqueous electrolyte battery by decreasing its internal resistance, maintain the durability of the battery by improving its electrochemical stability, and can be suitably used for capacitor members such as a lithium ion secondary battery and the like, can be obtained.

Hereinafter, each of the constitution elements will be explained in detail.

### (1) Conductive Substrate

As the conductive substrate 1 used in the present embodiment, various metal foils can be used. Aluminum foil, aluminum alloy foil, copper foil, stainless steel foil, nickel foil and the like can be used for the positive electrode and the negative electrode. From the viewpoint of the balance between the conductivity and cost, aluminum foil, aluminum alloy foil, and copper foil are preferable. When the aluminum foil is used for the positive electrode, conventionally known 3000 series and 1000 series can be used. However, from the viewpoint of high rate characteristics, pure aluminum series with high conductivity, such as JIS A1085 is preferably used. The thickness of the foil is preferably 5µm or more, and 50µm or less. When the thickness is less than 5µm, the strength of the foil is insufficient, and thus there are cases where the formation of the conductive resin layer becomes difficult. On the other hand, when the thickness exceeds 50µm, the other constitution elements, especially the active material layer or the electrode material layer need be made thin for such excess, thereby leading to a case where sufficient battery capacity cannot be obtained.

It is effective to perform a pretreatment to the conductive substrate 1, onto which the conductive resin layer 2 is formed, in order to improve the adhesion of the surface of the substrate. When a metal foil manufactured by rolling is used as the conductive substrate 1, there are cases where rolling oil and wear debris are left on the surface. In such cases, adhesion can be improved by removing them. In addition, adhesion can be improved by performing a dry activation treatment such as corona discharge treatment.

### (2) Conductive Resin Layer

In the present embodiment, a conductive resin layer 2 containing a conductive material is formed on the conductive substrate 1. There is no particular limitation with respect to the method of forming, however, it is preferable that a solution or a dispersion of the resin is coated on the conductive substrate 1. As the method for coating, a roll coater, a gravure coater, a slit dye coater and the like can be used. The inventors of the present invention have made an investigation with various resins in order to improve the durability of the non-aqueous electrolyte battery, and have found that when an acryl-based resin or a soluble nitrocellulose-based resin is used, and when the resin coated is dried at an appropriate temperature and then cooled at a rate of 100 °C/ min or more, a particularly superior durability can be obtained. Here, the cooling speed can be in the range of two values selected from 85, 90, 95, 100, 110, 120, 130, 140, 150, 160, 170, 180, 190, 200, 300, 400, 500, 600, 700, 800, 900, and 1000 °C/ min.

FIG. 2 is a graph showing an anode polarization curve of the current collector according to one embodiment of the present invention and an anode polarization curve of the current collector according to a Comparative Example. The present inventors have conducted a detailed investigation on the anode polarization curve of the current collector 3 in a battery electrolyte solution, as provided in the following Examples. Accordingly, the inventors have found that when the current collector 3 has a maximum current response (measured at an electrode potential of +3V to +4.5V versus a lithium reference electrode) of 10 µA/cm² (0.01 mA/cm²) or lower, the current collector 3 which is suitable for charge and discharge at a high current density, has long lifetime, and is suitable for a non-aqueous electrolyte battery, can be obtained. On the other hand, a current collector 3 of a non-aqueous electrolyte battery having inferior durability had a current response larger than 100 µA/cm² (0.10 mA/cm²) when measured with the same conditions. Here, the value of the maximum current response can be at or less than the following values, or be in the range of two values selected from the following. The values are 1, 2, 3, 4, 5, 6, 7, 8, 9, 10, 20, 30, 40, 50, 60, 70, 80, 90, and 100 µA/cm².

It is assumed that such difference in the maximum value of the current response is observed since a current flows by decomposition caused by oxidation of unstable conductive resin layer 2. This is due to the difference in the electrochemical stability of the conductive resin layer 2 which depends on the resin and conductive material contained in the conductive resin layer 2, and on the method of manufacturing. Therefore, the maximum value of the current response when the anode is polarized can be regarded as an index of the electrochemical stability of the conductive resin layer 2. The larger the value of the current response is, the more easily the conductive resin layer 2 becomes oxidized and decomposed. The maximum value of the current response is a maximum value which is regarded as acceptable in order to provide the characteristics as a current collector. When the value is larger than the maximum value, the conductive resin layer 2 becomes prone to decomposition and the characteristics as the current collector becomes inferior. In particular, when the electrode structure is prepared, it becomes unstable, and adverse effect is observed in the durability of the non-aqueous electrolyte battery.

In the present embodiment, the conductive resin layer 2 contains a resin component and a conductive material. Here, it is preferable that the conductive resin layer 2 is an acryl-based resin layer containing an acryl-based resin and a conductive material, or is a soluble nitrocellulose-based resin layer containing a soluble nitrocellulose-based resin and a conductive material. When a conductive resin layer 2 having such composition is used, a current collector improved in its electrochemical stability can be obtained, and thus an electrode structure which is suitable for charge and discharge at a high current density, and has long lifetime can be obtained.

The acryl-based resin used in the present embodiment is a resin formed from a monomer having an acrylic acid or a methacrylic acid, or a derivatives of them as a main component. The ratio of the acrylic component in the monomer of the acryl-based resin is, for example, 50 mass% (by solids, hereinafter the same) or more, preferably 80 mass% or more. There is no limitation with respect to the upper limit, and the monomer of the acryl-based resin may substantially be composed of only acrylic component.

In addition, the monomer of the acryl-based resin may contain one type of an acrylic component alone, or may contain two or more types of an acrylic component. Among the acryl-based resin, an acryl copolymer containing at least one monomer selected from the group consisting of a methacrylic acid, a derivative thereof, and an acryl-based compound having a polar group, is preferable. By using the acryl copolymer containing these monomers, the high rate characteristics can be further improved. As the methacrylic acid and a derivative thereof, methacrylic acid, methyl methacrylate, ethyl methacrylate, isopropyl methacrylate and the like can be mentioned. As the acryl-based compound having a polar group, acrylonitrile, methacryl amide, acryl amide, methacryl amide and the like can be mentioned. Among the acryl-based compound having a polar group, an acryl-based compound having an amide group is preferable. As the acryl-based compound having an amide group, acrylamide, N-methylol acrylamide, diacetone acrylamide can be mentioned.

There is no particular limitation with respect to the weight average molecular weight of the acryl-based resin, however, 30,000 or more and 200,000 or less is preferable. When the molecular weight is too small, the flexibility of the conductive resin layer 2 becomes low. In such case, when the current collector is wound with a small radius of curvature, a crack may occur in the conductive resin layer 2, resulting in decrease of the capacity of the battery and the like. When the molecular weight is too large, the adhesion of the conductive resin layer 2 with the conductive substrate 1 tends to become low. The weight average molecular weight can be measured with a resin solution before adding the conductive material, by using GPC (gel permeation chromatography).

When the acryl-based resin is formed and dried by coating, it is preferable that the final temperature of the conductive substrate 1 is 100 to 240 °C, drying time is 10 to 60 seconds, and the cooling speed is 100 °C/min or more. Under these conditions, the conductive resin layer 2 having electrochemical stability can be formed. The current collector, when the current response is measured at an electrode potential of +3V to +4.5V versus a lithium reference electrode, has a maximum value of the current response of 10 µA/cm² or lower. The final temperature of the conductive substrate 1 can be in the range of two values selected from 85, 90, 95, 100, 110, 120, 130, 140, 150, 160, 170, 180, 190, 200, 210, 220, 230, 240, and 250 °C.

In the present embodiment, the conductive resin layer 2 may be a soluble nitrocellulose-based resin layer containing a soluble nitrocellulose-based resin and a conductive material. By using the conductive resin layer 2 having such composition, a current collector with improved electrochemical stability can be obtained, and thus an electrode structure which is suitable for charge and discharge at a high current density, and has long lifetime, can be obtained.

In the present embodiment, the soluble nitrocellulose-based resin is a resin containing a soluble nitrocellulose as a resin component. Here, the soluble nitrocellulose-based resin may contain only the soluble nitrocellulose, or may contain a resin other than the soluble nitrocellulose. The soluble nitrocellulose is one type of cellulose which is a polysaccharide, and is characterized by possessing a nitro group. Although soluble nitrocellulose is a cellulose having a nitro group, in contrast with other celluloses such as CMC and the like, the soluble nitrocellulose is not widely used in electrodes, and have been conventionally used as a raw material of resin film or coatings.

The inventors of the present invention have found that high rate characteristics of a non-aqueous electrolyte battery can be greatly improved by first obtaining a soluble nitrocellulose-based resin composition by dispersing a conductive material in this soluble nitrocellulose, and then forming a resin layer containing the soluble nitrocellulose-based resin and the conductive material on the conductive substrate. The Nitrogen density of the soluble nitrocellulose used in the present embodiment is 10 to 13%, especially preferably 10.5 to 12.5%. When the Nitrogen density is too low, dispersion may not be sufficient depending on the type of conductive material. When the Nitrogen density is too high, the soluble nitrocellulose becomes chemically unstable, which would be dangerous when used for batteries. The Nitrogen density depends on the number of nitro group, and thus the Nitrogen density can be adjusted by adjusting the number of the nitro group. In addition, the viscosity of the soluble nitrocellulose is usually in the range of 1 to 6.5 second, preferably 1.0 to 6 seconds when observed by JIS K-6703. The acid content is preferably 0.006% or lower, especially preferably 0.005% or lower. When these values are not in such range, dispersibility of the conductive material and the battery characteristics may degrade.

The soluble nitrocellulose-based resin of the present embodiment can contain the soluble nitrocellulose by 100 parts by mass or other resin component may be used in combination. When the other resin component is used in combination, it is preferable that the soluble nitrocellulose-based resin is contained by 20 parts by mass or more, and is particularly preferable that the soluble nitrocellulose-based resin is contained by 25 parts by mass or more, with respect to the total resin component. Through an investigation conducted for the resistance of the resin layer prepared by adding a conductive material to various resins, it became apparent that when the soluble nitrocellulose-based resin is contained by 20 parts by mass or more, the resistance of the resin layer can be greatly reduced, and sufficient high rate characteristics can be obtained. It is assumed that this result was obtained since when the amount of soluble nitrocellulose formulated is too small, improvement in dispersibility of the conductive material, which is obtained as an effect of formulating the soluble nitrocellulose, may not be obtained. Addition of 20 parts by mass or more of the soluble nitrocellulose-based resin can sufficiently lower the resistance of the resin layer.

The soluble nitrocellulose-based resin used in the present embodiment may be used alone without any problem, however, other resin components may be used in combination. In the present invention, battery performance (including capacitor performance, hereinafter the same) was investigated to find that it is preferable to add a melamine-based resin, an acryl-based resin, a polyacetal-based resin, or an epoxy-based resin in combination. By such addition, the battery performance can be improved at a level equal to or higher than the case where the soluble nitrocellulose is used as a resin component by 100 parts by mass. Addition of such resins will be each described hereinafter.

The soluble nitrocellulose-based resin used in the present embodiment preferably contains a melamine-based resin. It is assumed that the work hardening of the conductive resin layer 2 is improved, adhesion with the conductive substrate 1 is improved, and the battery performance is improved, since the melamine-based resin undergoes a hardening reaction with the soluble nitrocellulose-based resin. The amount of the melamine-based resin being added shall be 5 to 160 mass% (by solids, hereinafter the same) with respect to the soluble nitrocellulose-based resin, more preferably 10 to 50 mass%. When the amount added is less than 5 mass%, the effect is low. When the amount added exceeds 160 mass%, the resin layer becomes too hard. This would cause detachment during the cutting and winding processes, and there may be a case where the discharge rate characteristics decrease. As the melamine-based resin, butyl etherified melamine, isobutyl etherified melamine, methyl etherified melamine and the like can be preferably used for example. The number average molecular weight of the melamine-based resin is, for example, 500 to 50,000, particularly for example 500, 1,000, 2,000, 2,500, 3,000, 4,000, 5,000, 10,000, 20,000, or 50,000. The number average molecular weight may be in the range of two values selected from the values exemplified above.

The soluble nitrocellulose-based resin used in the present embodiment preferably contains an acryl-based resin. The afore-mentioned acryl-based resin has superior adhesion especially with aluminum and copper. Therefore, addition of the acryl-based resin can improve the adhesion with the conductive substrate. The amount of the acryl-based resin being added shall be, 5 to 200 mass%, more preferably 10 to 150 mass%, when the soluble nitrocellulose as the resin component is taken as 100 mass%. When the amount added is less than 5 mass%, the effect is low. When the amount added exceeds 200 mass%, adverse effect is caused on the dispersibility of the conductive material. This may lead to a case where the discharge rate characteristics decreases. As the acryl-based resin, a resin containing acrylic acid, methacrylic acid, and derivatives thereof as a main component, or an acrylic copolymer including such monomers can preferably be used. In particular, methyl acrylate, ethyl acrylate, methyl methacrylate, isopropyl methacrylate and their copolymer can be used. In addition, acryl-based compounds having a polar group, such as acrylonitrile, methacrylonitrile, acryl amide, methacryl amide and the like, and a copolymer thereof can preferably be used. The weight average molecular weight of the acryl-based resin is, for example, 30,000 to 1,000,000, particularly for example 30,000, 40,000, 50,000, 60,000, 70,000, 80,000, 90,000, 100,000, 150,000, 200,000, 300,000, 400,000, 500,000, 600,000, 700,000, 800,000, 900,000, or 1,000,000. The weight average molecular weight may be in the range of two values selected from the values exemplified above.

The soluble nitrocellulose-based resin used in the present embodiment preferably contains a polyacetal-based resin. The afore-mentioned polyacetal-based resin is superior in compatibility with the soluble nitrocellulose. Therefore, suitable flexibility can be provided to the resin layer, and thus adhesion with the mixture layer after winding can be improved. The amount of the polyacetal-based resin being added shall be, 5 to 200 mass%, more preferably 20 to 150 mass%, when the soluble nitrocellulose as the resin component is taken as 100 mass%. When the amount added is less than 5 mass%, the effect is low. When the amount added exceeds 200 mass%, adverse effect is caused on the dispersibility of the conductive material. This may lead to a case where the discharge rate characteristics decrease. As the polyacetal-based resin, polyvinylbutyral, polyacetoacetal, polyvinylacetoacetal and the like can preferably be used. The weight average molecular weight of the polyacetal-based resin is, for example, 10,000 to 500,000, particularly for example 10,000, 20,000, 30,000, 40,000, 50,000, 60,000, 70,000, 80,000, 90,000, 100,000, 150,000, 200,000, or 500,000. The weight average molecular weight may be in the range of two values selected from the values exemplified above.

The soluble nitrocellulose-based resin used in the present embodiment preferably contains an epoxy-based resin. Since the epoxy-based resin is superior in adhesion with metal, the adhesion with the conductive substrate can be further improved by adding the epoxy-based resin. The amount of the epoxy-based resin being added shall be, 5 to 200 mass%, more preferably 10 to 150 mass%, when the soluble nitrocellulose as the resin component is taken as 100 mass%. When the amount added is less than 5 mass%, the effect is low. When the amount added exceeds 200 mass%, adverse effect is caused on the dispersibility of the conductive material. This may lead to a case where the discharge rate characteristics decrease. As the epoxy-based resin, glycidyl ether type resins such as bisphenol A type epoxy, bisphenol F type epoxy, tetramethylbiphenyl type and the like are preferable.. The weight average molecular weight of the epoxy-based resin is, for example, 300 to 50,000, particularly for example 300, 500, 1,000, 2, 000, 3,000, 4,000, 5,000, 10,000, 20,000, or 50,000. The weight average molecular weight may be in the range of two values selected from the values exemplified above.

As discussed, the soluble nitrocellulose-based resin used in the present embodiment preferably contains a soluble nitrocellulose, and at least one resin selected from the group consisting of a melamine-based resin; an acryl-based resin, a polyacetal-based resin, and an epoxy-based resin.

In addition, the soluble nitrocellulose-based resin used in the present embodiment preferably contains a melamine-based rein, a soluble nitrocellulose, and at least one resin selected from the group consisting of an acryl-based resin and a polyacetal-based resin. By such combination, the discharge rate characteristics become particularly superior. In addition, it is further preferable that the amount of the melamine-based resin is 10 to 40 mass%, and the amount of the soluble nitrocellulose is 50 to 70 mass%, when the total amount of the acryl-based resin, the polyacetal-based resin, the melamine-based resin, and the soluble nitrocellulose is taken as 100 mass%. In such case, the discharge rate characteristics becomes further superior.

When the acryl-based resin is formed and dried by coating, it is preferable that the final temperature of the conductive substrate 1 is 100 to 240 °C, drying time is 10 to 60 seconds, and the cooling speed is 100 °C/min or more. Under these conditions, the conductive resin layer 2 having electrochemical stability can be formed. The current collector, when the current response is measured at an electrode potential of +3V to +4.5V versus a lithium reference electrode, has a maximum value of the current response of 10 µA/cm² or lower. The final temperature of the conductive substrate 1 can be in the range of two values selected from 85, 90, 95, 100, 110, 120, 130, 140, 150, 160, 170, 180, 190, 200, 210, 220, 230, 240, and 250 °C.

The current collector 3 functions as a pathway of electrons which moves from the electrode to the opposite electrode, and thus conductivity is required at its surface. Since the conductive resin layer 2 shows insulating property, a conductive material need be added in order to provide conductivity. As the conductive material used in the present embodiment, carbon powder, metal powder and the like can be used. Here, carbon powder is preferable. As the carbon powder, acetylene black, Ketjen black, furnace black, carbon nanotube and the like can be used. In addition, carbon fiber and carbon nanotube can be used so long as they have conductivity. Among these, acetylene black, having a relatively long aggregate and thus achieving improvement in conductivity with relatively small amount of addition, is preferably used. The amount of the conductive material added is preferably 20 parts by mass or more and 80 parts by mass or less with respect to 100 parts by mass of the resin component (by solids) in the conductive resin layer. When the amount is less than 20 parts by mass, the resistance of the acryl-based resin layer becomes high. On the other hand, when the amount exceeds 80 parts by mass, the amount of the binder relatively decreases, and the adhesion with the active material layer or with the electrode material layer becomes low. The conductive material can be formulated and dispersed in the resin component by using a planetary mixer, a ball mill, a homogenizer, and the like.

The thickness of the conductive resin layer 2 can be adjusted in accordance with the application of the electrode. Here, the thickness is preferably 0.1 to 5µm, particularly preferably 0.3 to 3µm. When the thickness is less than 0.1µm, portions where the conductive substrate is not applied would appear, resulting in insufficient battery characteristics. When the thickness exceeds 5µm, the active material layer must be made thin for such excess in the thickness when structuring a battery. This would result is insufficient capacity density and would make it difficult to manage with the downsizing of batteries, capacitors and the like. In addition, concerning the application in square battery, when the electrode structure is wound together with a separator, cracks are formed in the resin layer at the most inner portions of winding having an extremely small radius of curvature. This would lead to generation of detachment from the active material layer. Here, with respect to the thickness, a film thickness measuring machine can be used to calculate the thickness of the resin layer as a difference in the thickness between the portion having the resin layer thereon and the portion without the resin (portion only with the aluminum foil).

### <Embodiment 2 : Electrode Structure>

The electrode structure of the present embodiment comprises the afore-mentioned current collector 3, and an active material layer or an electrode material layer formed on the conductive resin layer 2 of the current collector 3. That is, in the present embodiment, the electrode structure can be obtained by forming the active material layer on the conductive resin layer 2 which is formed on at least one side of the conductive substrate. In this case, the active material layer may be formed as a new layer on the conductive resin layer 2. Otherwise, the active material layer may be formed by formulating an active material in the resin, thereby allowing the conductive resin layer 2 to act as an active material layer. In either way, the electrochemical stability of the current collector can be improved, and thus the electrode structure which is suitable for charge and discharge at a high current density, and has long lifetime can be obtained.

The active material layer formed in the present embodiment may be the ones conventionally proposed for the non-aqueous electrolyte battery. For example, a positive electrode structure of a lithium ion battery can be obtained as follows. That is, a paste is prepared by using LiCoO₂, LiMnO₂, LiFePO₄ and the like as an active material, and carbon black such as acetylene black and the like as a conductive material (conductive particle) which are dispersed in an organic solvent or water with PVDF or PTFE as a binder. Then the paste obtained is coated on the current collector 3 of the present embodiment which uses an aluminum foil as a metal foil, by a conventional method, thereby giving the positive electrode structure of the present embodiment.

The negative electrode of the lithium ion battery can be obtained as follows. That is, a paste is prepared by using black lead, graphite, mesocarbon microbeads and the like as an active material, which is dispersed in CMC as a thickener. Then the paste obtained is coated on the current collector 3 of the present embodiment which uses a copper foil as a metal foil, thereby giving the negative electrode structure of the present embodiment.

Here, regarding an electrode for an electrical double layer capacitor as one example of a capacitor member, such electrode can be obtained as follows. That is, a paste is prepared by using activated charcoal as an active material, and Ketjen black and the like as a conductive material, which are dispersed in an organic solvent with PVDF as a binder. Then the paste obtained is coated on the current collector 3 of the present embodiment which uses aluminum foil, by a conventional method, thereby giving the electrode structure of the present embodiment.

### <Embodiment 3 : Application of Electrode Structure>

The electrode structure which uses the current collector 3 of the present embodiment can be used as an electrode in various applications. For example, the electrode structure can be used in the non-aqueous electrolyte battery, electrical double layer capacitor, lithium ion battery, and the capacitor member.

### <Embodiment 4 : Non-aqueous Electrolyte Battery>

A non-aqueous electrolyte battery of the present embodiment can be structured by placing a separator in between a positive electrode structure and a negative electrode structure, and then immersing the separator in a non-aqueous electrolyte solution. As the non-aqueous electrolyte solution and the separator, conventional ones used for the non-aqueous electrolyte battery can be used. For example, as the solvent of the electrolyte, carbonates, lactones and the like can be used. Here, LiPF₆ or LiBF₄ as electrolytes dissolved in a mixture of EC (ethylene carbonate) and EMC (ethylmethyl carbonate) can be used. As the separator, a membrane made of polyolefin having microporous can be used for example.

### <Embodiment 3 : Capacitor Member (Electrical Double Layer Capacitor, Lithium Ion Capacitor and the Like)>

The electrode of the present embodiment can be applied to an electrical double layer capacitor and a lithium ion capacitor, which require discharging and charging at a large current density, and a long lifetime. The electrode of the present embodiment can be manufactured by a conventional method. In this case, concerning the electrode for the electrical double layer capacitor of the present embodiment, electrode material layer of both the positive electrode and the negative electrode usually comprises an electrode material, a conductive material, a binder, and the like. The electrode for the electrical double layer capacitor can be manufactured by using the afore-mentioned electrode structures. The electrical double layer capacitor can be manufactured with this electrode structure, a separator, an electrolyte solution and the like. In the electrode structure for the electrical double layer capacitor and the electrical double layer capacitor of the present embodiment, conventional parts for the electrical double layer capacitor can be used for the parts other than the electrode. In particular, the ones conventionally used as the electrode material for electrical double layer capacitor can be used for the electrode material. For example, carbon powder such as activated charcoal and black lead, and carbon fiber can be used. As the conductive material, carbon black such as acetylene black can be used. As the binder, PVDF and SBR can be used for example. The electrical double layer capacitor can be structured by fixing a separator in between the electrode structures of the present invention, and then immersing the separator in the electrolyte solution. As the separator, a membrane made of polyolefin having microporous, or a non-woven fabric for an electrical double layer capacitor can be used for example. Regarding the electrolyte solution, carbonates and lactones can be used as the solvent for example, and tetraethylammonium salt, triethylmethylammonium salt and the like can be used as the electrolyte, and hexafluorophosphate, tetrafluoroborate and the like can be used as the negative ion. Lithium ion capacitor is structured by combining a negative electrode of a lithium ion battery and a positive electrode of an electrode double layer capacitor.

The embodiments of the present invention have been described above. Here, the embodiments are merely an exemplification of the present invention, and thus the present invention may adopt various compositions other than the ones described above.

### Examples

The present invention will be described in details with reference to Examples, however, the present invention shall not be limited to the Examples.

### 1. Preparation of Metal Foil Coated With Resin

### (Examples 1 to 4, and 18 to 21)

An acryl copolymer was prepared by polymerizing monomers including acrylic acid, butyl acrylate, and methyl acrylate (ratio by weight being 5:45:40 by solids) so that the weight average molecular weight comes in the range of 90,000 to 120,000. The acryl copolymer thus prepared was dispersed in water by using a surfactant to give a resin solution. To this resin solution, 60 mass% (with respect to the solids of the resin) of acetylene black was added, followed by dispersion using a ball mill to obtain a coating. The coating thus obtained was coated on one side of an aluminum foil (JIS A1085) with a thickness of 20µm using a bar coater. The coating was then dried for 30 seconds by heating the coating so that the end point temperatures of the conductive substrate is either one of 100°C, 125°C, 150°C, 175°C, or 200°C as shown in Tables 1 and 2. Then, the coating was cooled at a rate of 100 °C/min, to obtain the current collector 3. The thickness of the conductive resin layer 2 after baking was regulated to 2µm. Here, film thickness measuring machine "HAKATTARO G" (available from SEIKO-em) was used to calculate the thickness of the conductive resin layer 2 after baking. The thickness was obtained as a difference in the thickness between the portion formed with the resin layer and the portion without the resin (portion only with the aluminum foil). (The same applies hereafter.)

### (Examples 5 to 8, and 22 to 25)

A resin solution was prepared by dissolving 80 mass% of soluble nitrocellulose (JIS K6703L1/4) as the main resin (here, the weight of the soluble nitrocellulose is the weight of solids), and 20 mass% of butyl etherified melamine as the hardening agent, in an organic solvent. Then, acetylene black was added to the resin solution by 60 mass% with respect to the solid component (by solids of the resin, hereinafter the same) of the resin. The mixture was then dispersed with a ball mill for 8 hours to give a coating. The coating thus obtained was coated on one side of the aluminum foil (JIS A1085) with a thickness of 20µm using a bar coater. The coating was then dried for 30 seconds by heating the coating so that the end point temperatures of the conductive substrate is either one of 100°C, 150°C, 200°C, or 240°C as shown in Tables 1 and 2. Then, the coating was cooled at a rate of 100 °C/min, to obtain the current collector 3. The thickness of the conductive resin layer 2 after baking was regulated to 2µm.

### (Comparative Examples 9 and 26)

The end point temperatures of the conductive substrate 1 was set to 260 °C as shown in Tables 1 and 2, and the conditions other than the end point temperatures of the conductive substrate 1 were the same as Example 2.

### (Comparative Examples 10 and 27)

The end point temperatures of the conductive substrate 1 was set to 80 °C as shown in Tables 1 and 2, and the conditions other than the end point temperatures of the conductive substrate 1 were the same as Example 2.

### (Comparative Examples 11 and 28)

The cooling speed of the conductive substrate 1 was set to 80 °C/min as shown in Tables 1 and 2, and the other conditions were the same as Example 2.

### (Comparative Examples 12 to 14, and 29 to 31)

A resin solution was prepared by dissolving a phenol resin in methyl ethyl ketone (hereinafter referred to as MEK). Then, acetylene black was added to the resin solution by 60 mass% with respect to the solid content of the resin. The mixture was then dispersed with a ball mill for 8 hours to give a coating. The coating thus obtained was coated on one side of the aluminum foil (JIS A1085) with a thickness of 20µm using a bar coater. The coating was then dried for 30 seconds by heating the coating so that the end point temperatures of the conductive substrate is either one of 100°C, 150°C, or 200°C as shown in Table 1 or 2. Then, the coating was cooled at a rate of 100 °C/min, to obtain the current collector 3. The thickness of the conductive resin layer 2 after baking was regulated to 2µm.

### (Comparative Examples 15 to 17, and 32 to 34)

A resin solution was prepared by dissolving a formulation of an epoxy resin and a melamine resin (formulation ratio of 95:5) in MEK. Then, acetylene black was added to the resin solution by 60 mass% with respect to the solid content of the resin. The mixture was then dispersed with a ball mill for 8 hours to give a coating. The coating thus obtained was coated on one side of the aluminum foil (JIS A1085) with a thickness of 20µm using a bar coater. The coating was then dried for 30 seconds by heating the coating so that the end point temperatures of the conductive substrate is either one of 100°C, 150°C, or 200°C as shown in Table 1 or 2. Then, the coating was cooled at a rate of 100 °C/min, to obtain the current collector 3. The thickness of the conductive resin layer 2 after baking was regulated to 2µm.

**[Table 1]**

| | Binder Resin | Drying Temperature | Cooling Speed | Current Density | Cycle Characteristics | Discharge Rate Characteristics (% Relative to 0.2C) | | | | Evaluation |
|---|---|---|---|---|---|---|---|---|---|---|
| | | °C | °C/min | µA/cm² | Times | 1C | 5C | 10C | 20C | |
| Ex. 1 | Acryl-based | 100 | 100 | 8.5 | 412 | 97 | 95 | 91 | 83 | Good |
| Ex. 2 | Acryl-based | 150 | 100 | 6.8 | 450 | 99 | 96 | 89 | 86 | Excellent |
| Ex. 3 | Acryl-based | 200 | 100 | 1.9 | 482 | 98 | 96 | 92 | 87 | Excellent |
| Ex. 4 | Acryl-based | 240 | 100 | 2.5 | 447 | 99 | 97 | 91 | 88 | Good |
| Ex. 5 | Soluble Nitrocellulose-based | 100 | 100 | 9.2 | 402 | 96 | 96 | 87 | 86 | Good |
| Ex. 6 | Soluble Nitrocellulose-based | 150 | 100 | 5.4 | 453 | 98 | 96 | 88 | 84 | Excellent |
| Ex. 7 | Soluble Nitrocellulose-based | 200 | 100 | 2.3 | 464 | 97 | 95 | 89 | 86 | Excellent |
| Ex. 8 | Soluble Nitrocellulose-based | 240 | 100 | 3.8 | 434 | 99 | 96 | 88 | 82 | Excellent |
| Comp. Ex. 9 | Acryl-based | 260 | 100 | 15 | 338 | 95 | 87 | 82 | 79 | Poor |
| Comp. Ex. 10 | Acryl-based | 80 | 100 | 28 | 276 | 96 | 81 | 79 | 66 | Poor |
| Comp. Ex. 11 | Acryl-based | 150 | 80 | 24 | 365 | 95 | 86 | 81 | 78 | Poor |
| Comp. Ex. 12 | Phenol-based | 100 | 100 | 110 | 57 | 96 | 83 | 81 | 76 | Poor |
| Comp. Ex. 13 | Phenol-based | 150 | 100 | 120 | 84 | 92 | 84 | 82 | 75 | Poor |
| Comp. Ex. 14 | Phenol-based | 200 | 100 | 83 | 76 | 90 | 85 | 80 | 78 | Poor |
| Comp. Ex. 15 | Epoxy-basted | 100 | 100 | 86 | 64 | 93 | 84 | 81 | 73 | Poor |
| Comp. Ex. 16 | Epoxy-based | 150 | 100 | 75 | 83 | 92 | 85 | 82 | 72 | Poor |
| Comp. Ex. 17 | Epoxy-basted | 200 | 100 | 67 | 79 | 92 | 88 | 82 | 74 | Poor |

**[Table 2]**

| | Binder Resin | Drying Temp. | Cooling Speed | Current Density | Cycle Characteristics | Discharge Rate Characteristics (% Relative to 1C) | | | Evaluation |
|---|---|---|---|---|---|---|---|---|---|
| | | °C | °C/min | µA/cm² | Times | 100C | 300C | 500C | |
| Ex. 18 | Acryl-based | 100 | 100 | 8.5 | 4500 or more | 92 | 83 | 68 | Excellent |
| Ex. 19 | Acryl-based | 150 | 100 | 6.8 | 4500 or more | 95 | 84 | 73 | Excellent |
| Ex. 20 | Acryl-based | 200 | 100 | 1.9 | 4500 or more | 94 | 84 | 74 | Excellent |
| Ex. 21 | Acryl-based | 240 | 100 | 2.5 | 4360 | 93 | 82 | 70 | Good |
| Ex. 22 | Soluble Nitrocellulose-based | 100 | 100 | 9.2 | 4500 or more | 92 | 81 | 69 | Excellent |
| Ex. 23 | Soluble Nitrocellulose-based | 150 | 100 | 5.4 | 4500 or more | 94 | 83 | 72 | Excellent |
| Ex. 24 | Soluble Nitrocellulose-based | 200 | 100 | 2.3 | 4500 or more | 93 | 84 | 69 | Excellent |
| Ex. 25 | Soluble Nitrocellulose-based | 240 | 100 | 3.8 | 4500 or more | 93 | 82 | 71 | Excellent |
| Comp. Ex. 26 | Acryl-based | 260 | 100 | 15 | 3325 | 95 | 79 | 53 | Poor |
| Comp. Ex. 27 | Acryl-based | 80 | 100 | 28 | 2337 | 92 | 81 | 52 | Poor |
| Comp. Ex. 28 | Acryl-based | 150 | 80 | 24 | 3458 | 90 | 80 | 53 | Poor |
| Comp. Ex. 29 | Phenol-based | 100 | 100 | 110 | 1354 | 87 | 82 | 51 | Poor |
| Comp. Ex. 30 | Phenol-based | 150 | 100 | 120 | 1678 | 86 | 80 | 50 | Poor |
| Comp. Ex. 31 | Phenol-based | 200 | 100 | 83 | 1423 | 86 | 78 | 49 | Poor |
| Comp. Ex. 32 | Epoxy-based | 100 | 100 | 86 | 2005 | 88 | 79 | 53 | Poor |
| Comp. Ex. 33 | Epoxy-based | 150 | 100 | 75 | 2030 | 87 | 77 | 50 | Poor |
| Comp. Ex. 34 | Epoxy-based | 200 | 100 | 67 | 2002 | 89 | 76 | 48 | Poor |

### 2. Measurement of Anode Polarization Curve

A test piece was used as a working electrode, Li metal was used as a counter electrode, and Li metal was used as a reference electrode. A three pole cell for the measurement was structured by immersing a separator made of polyolefin having microporous in a 1 mol/L solution of LiPF6 in a solvent mixture of EC and EMC (formulation ratio being EC:EMC = 3:7) as an electrolyte solution. The spontaneous-potential was measured for 30 minutes, and then the current was measured while sweeping from the spontaneous potential to 5.5V at the sweep rate of 60 mV/min. The measurement was conducted at 25°C. The results are shown in Tables 1 and 2.

### 3. Preparation of Lithium Ion Battery, and Evaluation of Cycle Characteristics and Discharge Rate Characteristics (Example 1 to Comparative Example 17)

LiCoO₂ was used as a positive electrode active material, and acetylene black was used as a conductive material. PVDF (polyvinylidene fluoride) as a binder was dissolved in NMP (N-methyl pyrrolidone), followed by the addition of a positive electrode active material and a conductive material. The obtained mixture was kneaded to give a paste. The weight ratio of each component was arranged so as to be, positive electrode active material : conductive material : binder : solvent = 90:5:5:100. The paste obtained was coated on the current collector 3 by using an applicator and an automatic coating device, followed by drying at 120°C for 10 minutes. The coating was pressed by using a roll press machine to give a positive electrode structure with a thickness of 80 µm. Regarding a negative electrode, a paste was first obtained by dispersing black lead as an active material in CMC (carboxy methyl cellulose), followed by mixing with SBR (styrene butadiene rubber) as a binder. Then, the paste obtained was coated on a copper foil with a thickness of 20 µm to give a negative electrode structure with a thickness of 70 µm. A microporous separator made of polypropylene was sandwiched in between these electrode structures, and were cased in a battery case to prepare a coin battery. As for the electrolyte solution, 1M of LiPF6 was added to a solution mixture of EC (ethylene carbonate) and EMC (ethyl methyl carbonate), and used.

In accordance with the method provided in "§7.5 Cycle Life" of JIS C8711 "Secondary cells and batteries containing alkaline or other non-acid electrolytes-Secondary lithium cells and batteries for portable applications", the number of charge-discharge cycles were measured until the discharge capacity reaches below 60% of the rating capacity. For example, the battery was charged under the current condition of 0.2C to 4.2V at 25°C. Then, the battery was discharged under the current condition of 0.2C to the discharge final voltage of 2.8V. This charge-discharge cycle was repeated until the discharge capacity reaches below 60% of the rating capacity. The number of cycles was counted. The results are shown in Tables 1 and 2.
Excellent : 450 cycles or more
Good : 400 cycles or more and less than 450 cycles
Poor : less than 400 cycles

With the current conditions of 0.2C, which was calculated from the theoretical capacity per weight of the positive electrode active material, the battery was charged to a charging upper limit voltage of 4.2V, and was then discharged to discharge final voltage of 2.8V. The battery was charged with the same conditions as mentioned, discharged at 1C, 5C, 10C, or 20C to obtain a discharge curve. Discharge capacity was calculated from the discharge curve. The relative value of the discharge capacity at each discharge rate relative to that at 0.2C was calculated and shown in % in Tables 1 and 2.

### 4. Preparation of Electrical Double Layer Capacitor, and Evaluation of Cycle Characteristics and Discharge Rate Characteristics

### (Example 18 to Comparative Example 34)

Activated charcoal as an active material, Ketjen black as a conductive material, and PVDF as a binder were dissolved in NMP as a solvent, followed by kneading to obtain a paste. The weight ratio or each component was arranged so as to be, active material : conductive material : binder : solvent = 80:5:15:300. The paste obtained was coated on the current collector 3 by using an applicator and an automatic coating device, followed by drying at 120°C for 10 minutes. The coating was pressed by using a roll press machine to give an electrode structure with a thickness of 90 µm. A non-woven fabric for an electrical double layer capacitor, immersed in an electrolyte solution, was sandwiched in between two of these electrode structures, thereby structuring an electrical double layer capacitor. As for the electrolyte solution, 1.5M of TEMA (triethyl methyl ammonium) and tetrafluoroborate were added to polypropylene carbonate as a solvent, and used.

Discharge capacity of these electrical double layer capacitors (value relative to that at 1C, unit: %) was measured for the discharge current rate of 100C, 300C, and 500C, when the upper voltage limit of charged state was 2.8 V, charge current was 1C, condition for the completion of charging was 2 hours, discharge final voltage was 0 V, and the temperature was 25°C. The results are shown in Tables 1 and 2.

The electrical double layer capacitors were charged under the electrolyte solution temperature of 40°C, upper limit voltage of 2.8V, and charging current of 500C. Then, the capacitors were discharged at the discharging current of 500C to the final voltage of 0V. The number of cycles, required for the discharge capacity to reach below 80% of the discharge capacity obtained for the first cycle, was counted. Evaluation was made in accordance with the following criteria. The results are shown in Tables 1 and 2.
Excellent : 4,500 cycles or more
Good : 4,000 cycles or more and less than 4,500 cycles
Poor : less than 4,000 cycles

### <Result of Evaluation>

The results of evaluation obtained when the current collector 3 of the Examples and Comparative Examples were used for the lithium ion battery are shown in Table 1. The results of evaluation obtained when they were used for the electrical double layer capacitor are shown in Table 2.

Each of the Examples 1 to 8 showed a maximum current response of 10 µA/cm² or lower, when the current response was measured at an electrode potential of +3V to +4.5V versus a lithium reference electrode. The lithium ion batteries showed sufficient cycle lifetime.

The drying temperature in Comparative Example 9 was too high, and thus the conductive resin layer 2 was chemically unstable. Accordingly, it showed a maximum current response higher than 10 µA/cm², when the current response was measured at an electrode potential of +3V to +4.5V versus a lithium reference electrode. In addition, the cycle lifetime of the lithium ion battery was inferior. The drying temperature in Comparative Example 10 was too low, and thus the conductive resin layer 2 was chemically unstable. Accordingly, it showed a maximum current response higher than 10 µA/cm², when the current response was measured at an electrode potential of +3V to +4.5V versus a lithium reference electrode. In addition, the cycle lifetime of the lithium ion battery was inferior. The cooling speed in Comparative Example 11 was too slow, and thus the conductive resin layer 2 was electrochemically unstable. Accordingly, it showed a maximum current response higher than 10 µA/cm², when the current response was measured at an electrode potential of +3V to +4.5V versus a lithium reference electrode. In addition, the cycle lifetime of the lithium ion battery was inferior.

In Comparative Examples 12 to 14, the phenol resin was electrochemically unstable. Accordingly, they showed a maximum current response higher than 10 µA/cm², when the current response was measured at an electrode potential of +3V to +4.5V versus a lithium reference electrode. In addition, the cycle lifetime of the lithium ion batteries were inferior. In Comparative Examples 15 to 17, the epoxy resin was electrochemically unstable. Accordingly, they showed a maximum current response higher than 10 µA/cm², when the current response was measured at an electrode potential of +3V to +4.5V versus a lithium reference electrode. In addition, the cycle lifetime of the lithium ion batteries were inferior.

Each of the Examples 18 to 25 showed a maximum current response of 10 µA/cm² or lower, when the current response was measured at an electrode potential of +3V to +4.5V versus a lithium reference electrode. The electrical double layer capacitors showed sufficient cycle lifetime.

The drying temperature in Comparative Example 26 was too high, and thus the conductive resin layer 2 was chemically unstable. Accordingly, it showed a maximum current response higher than 10 µA/cm², when the current response was measured at an electrode potential of +3V to +4.5V versus a lithium reference electrode. In addition, the cycle lifetime of the electrical double layer capacitor was inferior. The drying temperature in Comparative Example 27 was too low, and thus the conductive resin layer 2 was chemically unstable. Accordingly, it showed a maximum current response higher than 10 µA/cm², when the current response was measured at an electrode potential of +3V to +4.5V versus a lithium reference electrode. In addition, the cycle lifetime of the electrical double layer capacitor was inferior. The cooling speed in Comparative Example 28 was too slow, and thus the conductive resin layer 2 was electrochemically unstable. Accordingly, it showed a maximum current response higher than 10 µA/cm², when the current response was measured at an electrode potential of +3V to +4.5V versus a lithium reference electrode. In addition, the cycle lifetime of the electrical double layer capacitor was inferior.

In Comparative Examples 29 to 31, the phenol resin was electrochemically unstable. Accordingly, they showed a maximum current response higher than 10 µA/cm², when the current response was measured at an electrode potential of +3V to +4.5V versus a lithium reference electrode. In addition, the cycle lifetime of the electrical double layer capacitors were inferior. In Comparative Examples 32 to 34, the epoxy resin was electrochemically unstable. Accordingly, they showed a maximum current response higher than 10 µA/cm², when the current response was measured at an electrode potential of +3V to +4.5V versus a lithium reference electrode. In addition, the cycle lifetime of the electrical double layer capacitors were inferior.

The present invention has been described with reference to the Examples. These Examples are merely an exemplification, and it should be noted that there are various possible alteration for the present invention and such alteration are also included in the present invention.

### Explanation of Symbols

1: Conductive Resin Layer
2: Conductive Substrate
3: Current Collector

## Claims

1. A current collector, comprising:
a conductive substrate, and
a resin layer possessing conductivity formed on at least one side of the conductive substrate, wherein
the current collector is configured to have a maximum current response of 10 µA/cm² or lower, when the current response is measured under conditions that the current collector is placed in a nonaqueous electrolyte solution at an electrode potential of +3V to 4.5V versus a lithium reference electrode.

2. The current collector of Claim 1, wherein the resin layer possessing conductivity is an acryl-based resin layer comprising an acryl-based resin and a conductive material.

3. The current collector of Claim 1, wherein the resin layer possessing conductivity is a soluble nitrocellulose-based resin layer comprising a soluble nitrocellulose-based resin and a conductive material.

4. An electrode structure comprising the current collector of Claim 1, wherein:
the resin layer possessing conductivity comprises an active material, or
an active material layer or an electrode material layer is formed on the resin layer possessing conductivity.

5. A non-aqueous electrolyte battery, comprising the electrode structure of Claim 4.

6. A capacitor member, comprising the electrode structure of Claim 4.
